# EUROPEAN PATENT APPLICATION

(11) **EP 4 663 817 A1**
(43) Date of publication of application: **17.12.2025**
(21) Application number: 24753377.1
(22) Date of filing: 07.02.2024
(51) Int. Cl.: C25D 5/26, C21D 9/46, C22C 19/03, C22C 38/00, C22C 38/16, C23C 10/52, C25D 5/50

(54) **SURFACE-TREATED STEEL SHEET**

(30) Priority: 07.02.2023 JP 2023016704
(71) Applicant: NIPPON STEEL CORPORATION, Chiyoda-ku Tokyo 100-8071 (JP)
(72) Inventor: KAWAMOTO Kosuke, Tokyo 100-8071 (JP); GOTO Yasuto, Tokyo 100-8071 (JP)
(74) Representative: Vossius & Partner Patentanwälte Rechtsanwälte mbB
(86) International application number: PCT/JP2024/004075
(87) International publication number: WO 2024/166934

(57) **Abstract**

A surface-treated steel sheet according to one aspect of the present invention is a surface-treated steel sheet including: a base steel sheet; a Ni-containing layer disposed on a surface of the base steel sheet; and a Ni-W alloy layer disposed on a surface of the Ni-containing layer, wherein the Ni-containing layer includes an Fe-diffused alloy layer, and a number density of pinholes on a surface of the Ni-W alloy layer is 4.0 /cm² or less. Preferably, an average W concentration in the Ni-W alloy layer is 10 to 45 mass%. Preferably, an attached amount of Ni included in the Ni-containing layer and the Ni-W alloy layer is 1.8 to 35.6 g/m².

## Description

### TECHNICAL FIELD

The present invention relates to a surface-treated steel sheet.

Priority is claimed on Japanese Patent Application No. 2023-016704, filed February 7, 2023, the content of which is incorporated herein by reference.

### BACKGROUND ART

Conventionally, Ni-plated steel sheets have been used as surface-treated steel sheets for battery cans. Ni-plated steel sheets are used for various battery containers such as battery cans of alkaline manganese dry batteries, lithium ion batteries, and nickel hydrogen batteries because of their excellent chemical stability of Ni.

In recent years, Ni-W alloy plated steel sheets including an alloy of Ni and W as a main component have also started to be used as a material of a battery can or the like. An example of a Ni-W alloy plated steel sheet is the steel sheets described in Patent Documents 1 to 4.

Patent Document 1 discloses a plated steel sheet for a battery container characterized in that an iron-nickel alloy layer, a nickel layer, and a nickel-tungsten alloy layer are formed in this order from the bottom on a steel sheet on a side to be an inner surface of the battery container of the steel sheet.

Patent Document 2 discloses a Ni-containing surface-treated steel sheet for a container molded by press molding, including a steel sheet having a first surface that becomes an outer side of the container after the press molding, a Ni-containing layer disposed on the first surface of the steel sheet, and a Ni-W alloy plating layer disposed on the Ni-containing layer. In the disclosed surface-treated steel sheet, the Ni-containing layer includes an Fe-Ni-diffused alloy layer, and the amount of Ni included in the Ni-containing layer is 5 g/m² or more and 89 g/m² or less; the Ni-W alloy plating layer has a thickness of 0.02 µm or more and 2 µm or less; and a W concentration in the Ni-W alloy plating layer is 10% or more and 65% or less by mass%.

Patent Document 3 discloses a steel sheet for a non-aqueous electrolytic solution secondary battery case including a steel sheet and a Ni-W-Fe alloy plating layer formed on a surface of the steel sheet, containing a Ni-W-Fe alloy, and serving as an inner surface of the non-aqueous electrolytic solution secondary battery case.

Patent Document 4 discloses a steel sheet for an alkaline battery can used for a battery can of an inside-out type alkaline battery, characterized by including a plating layer selected from nickel-tungsten (Ni-W) and a nickel-cobalt-tungsten (Ni-Co-W) alloy on a surface layer of one main surface of a substrate made of a plate-shaped steel material, in which the plating layer has irregularities formed by elution of the tungsten on the surface.

### Citation List

### Patent Document

Patent Document 1: Japanese Unexamined Patent Application, First Publication No. 2007-51325
Patent Document 2: PCT International Publication No. WO 2012/137823
Patent Document 3: PCT International Publication No. WO 2017/006834
Patent Document 4: Japanese Unexamined Patent Application, First Publication No. 2020-155202

### SUMMARY OF INVENTION

### Technical Problem

The surface-treated steel sheet for battery cans is required to exhibit low contact resistance, and high discharge characteristics, high metal elution resistance, high workability, and the like. Moreover, because battery applications have recently broadened, corrosion resistance is now also demanded for the surface-treated steel sheet for battery cans. However, the corrosion resistance of surface-treated steel sheets containing Ni-W-Fe alloy as a main component has not yet been sufficiently investigated in the prior art.

Patent Document 1 has an object of suppressing contact resistance and improving discharge characteristics, but no particular study has been made on the workability of the plated steel sheet.

Patent Document 2 has an object of improving corrosion resistance after press forming. In the steel sheet of Patent Document 2, Fe-Ni diffusion alloy layer is used to prevent cracks generated during press forming from reaching the base steel sheet, thereby enhancing the corrosion resistance of worked portions. However, Patent Document 2 does not particularly study the corrosion resistance in regions other than the worked portions of the plated steel sheet.

Patent Document 3 has an object of suppressing battery-performance deterioration and case corrosion caused by metal elution when the battery-case potential rises. However, Patent Document 3 does not particularly study corrosion resistance under corrosive environments such as that evaluated by the red-rust occurrence rate.

Patent Document 4 has an object of improving high load discharge performance and long-term storage performance of the steel sheet, but does not particularly study the corrosion resistance of the steel sheet.

In view of the above circumstances, an object of the present invention is to provide a surface-treated steel sheet having excellent corrosion resistance.

### Solution to Problem

The gist of the present invention is as described below.

(1) A surface-treated steel sheet according to one aspect of the present invention includes: a base steel sheet; a Ni-containing layer disposed on a surface of the base steel sheet; and a Ni-W alloy layer disposed on a surface of the Ni-containing layer, wherein the Ni-containing layer includes an Fe-diffused alloy layer, and a number density of pinholes on a surface of the Ni-W alloy layer is 4.0 /cm² or less.
(2) Preferably, in the surface-treated steel sheet according to (1), an average W concentration in the Ni-W alloy layer is 10 to 45 mass%.
(3) Preferably, in the surface-treated steel sheet according to (1) or (2), an attached amount of Ni included in the Ni-containing layer and the Ni-W alloy layer is 1.8 to 35.6 g/m².
(4) Preferably, in the surface-treated steel sheet according to (1) to (3), the Fe-diffused alloy layer has a thickness of 0.1 to 3.0 µm.
(5) Preferably, in the surface-treated steel sheet according to (1) to (4), the Ni-containing layer has a thickness of 0.2 to 4.0 µm.
(6) Preferably, in the surface-treated steel sheet according to (1) to (5), the number density of the pinholes on the surface of the Ni-W alloy layer is 3.0 /cm² or less.
(7) Preferably, in the surface-treated steel sheet according to (1) to (6), only part of the Ni-containing layer is the Fe-diffused alloy layer.
(8) Preferably, in the surface-treated steel sheet according to (1) to (6), the Ni-containing layer is entirely the Fe-diffused alloy layer, and part of the Ni-W alloy layer is the Fe-diffused alloy layer.

### Advantageous Effects of Invention

According to the present invention, it is possible to provide a surface-treated steel sheet having excellent corrosion resistance.

### BRIEF DESCRIPTION OF DRAWINGS

[FIG. 1] FIG. 1 is a schematic cross-sectional view of an example of a surface-treated steel sheet according to the present embodiment.
[FIG. 2] FIG. 2 is a schematic cross-sectional view of another example of a surface-treated steel sheet according to the present embodiment.
[FIG. 3] FIG. 3 is a flowchart describing an example of a method for manufacturing a surface-treated steel sheet according to the present embodiment.

### DESCRIPTION OF EMBODIMENTS

### (1. Surface-Treated Steel Sheet 1)

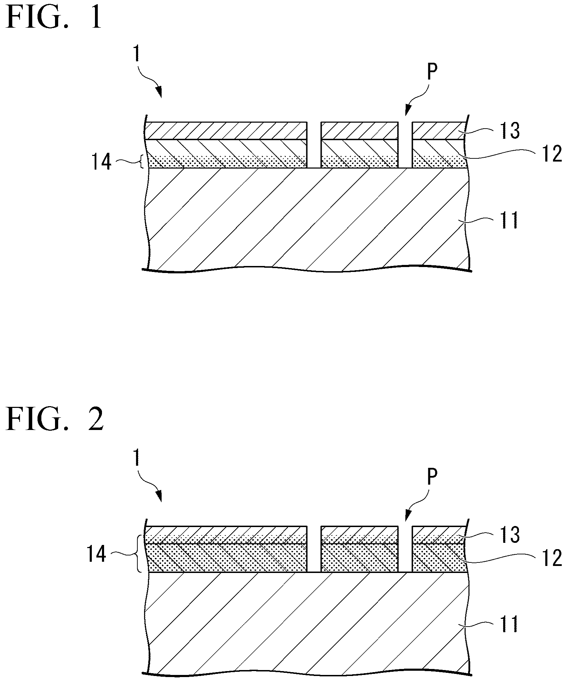

As illustrated in FIGS. 1 and 2, a surface-treated steel sheet 1 according to one aspect of the present invention includes a base steel sheet 11, a Ni-containing layer 12 disposed on a surface of the base steel sheet 11, and a Ni-W alloy layer 13 disposed on a surface of the Ni-containing layer 12, in which the Ni-containing layer 12 includes an Fe-diffused alloy layer 14, and a number density of pinholes P on a surface of the Ni-W alloy layer 13 is 4.0 /cm² or less.

Hereinafter, the surface-treated steel sheet 1 according to the present embodiment will be described in detail. The entire plating layer including the Ni-containing layer 12 and the Ni-W alloy layer 13 may be simply referred to as a "plating layer".

### (Base Steel Sheet 11)

The surface-treated steel sheet 1 includes the base steel sheet 11. The base steel sheet 11 is a steel sheet serving as a substrate of the surface-treated steel sheet 1. The components, the sheet thickness, the metallographic structure, and the like of the base steel sheet 11 are not particularly limited, and can be appropriately selected according to the application of the surface-treated steel sheet 1.

### (Ni-Containing Layer 12)

The surface-treated steel sheet 1 includes the Ni-containing layer 12 disposed on the surface of the base steel sheet 11. The Ni-containing layer 12 contains Ni and is provided on the surface of the base steel sheet 11. The Ni-containing layer 12 may be provided only on one surface of the base steel sheet 11 or may be provided on both surfaces. Ni-Containing Layer 12 has an effect of improving the corrosion resistance of the worked portion.

### (Ni-W Alloy Layer 13)

The surface-treated steel sheet 1 further includes the Ni-W alloy layer 13 disposed on the surface of the Ni-containing layer 12. The Ni-W alloy layer 13 is an alloy plating layer containing Ni as a main component and further containing W. The Ni-W alloy plating is harder than Ni. By analyzing the component distribution of the plating layer using glow discharge optical emission spectrometry, which is an analysis method capable of measuring the depth direction distribution of chemical composition, the Ni-W alloy layer 13 having a high W concentration and the Ni-containing layer 12 having a low W concentration can be distinguished.

The Ni-W alloy layer 13 may be provided only on one surface of the base steel sheet 11 or may be provided on both surfaces. A surface treatment layer such as a coating film may be further provided on the surface of the Ni-W alloy layer 13.

### (Fe-diffused Alloy Layer 14)

At least part of the Ni-containing layer 12 is the Fe-diffused alloy layer 14. That is, the Ni-containing layer 12 includes the Fe-diffused alloy layer 14. The Fe-diffused alloy layer 14 is an alloy layer 13 formed by diffusing Fe of the base steel sheet 11 into the plating layer. The Fe-diffused alloy layer 14 is obtained, for example, by plating the surface of the base steel sheet 11 and then performing an alloying treatment such as annealing.

In the schematic cross-sectional view illustrated in FIG. 1, only part of the Ni-containing layer 12 is the Fe-diffused alloy layer 14 in contact with the base steel sheet 11. On the other hand, as illustrated in FIG. 2, the Ni-containing layer 12 may be entirely the Fe-diffused alloy layer 14. As illustrated in FIG. 2, the Fe-diffused alloy layer 14 may extend to the Ni-W alloy layer 13. That is, the Ni-W alloy layer 13 may include the Fe-diffused alloy layer 14. Only part of the Ni-W alloy layer 13 may be the Fe-diffused alloy layer 14, or the Ni-W alloy layer 13 may be entirely the Fe-diffused alloy layer 14. The Fe-diffused alloy layer 14 formed in the Ni-containing layer 12 may be referred to as a Ni-Fe alloy layer, and the Fe-diffused alloy layer 14 formed in the Ni-W alloy layer 13 may be referred to as a Ni-W-Fe alloy layer. In general, a surface-treated steel sheet in which only part of the Ni-containing layer 12 is the Fe-diffused alloy layer 14 and a surface-treated steel sheet in which the Ni-containing layer 12 is entirely the Fe-diffused alloy layer 14 and only part of the Ni-W alloy layer 13 is the Fe-diffused alloy layer 14 are referred to as partial diffusion plated steel sheets. A surface-treated steel sheet in which the Ni-containing layer 12 and the Ni-W alloy layer 13 are entirely the Fe-diffused alloy layer 14 is referred to as an entire diffusion plated steel sheet.

### (Number Density of Pinholes P)

Pinholes P may be formed in the plating layer. "Pinholes P" refers to minute holes that penetrate from the surface of the plating layer to the base steel sheet 11. The pinholes P expose the base steel sheet 11 to a corrosive environment and accelerate corrosion of the base steel sheet 11. In the surface of the plating layer, pits, which are holes that do not penetrate the plating layer may be formed; however, in the surface-treated steel sheet 1 according to the present embodiment, pits are distinguished from pinholes P.

The number density of pinholes P can be identified by a ferroxyl test conducted under specific conditions. In the ferroxyl test, at first, a piece of filter paper impregnated with a test solution that corrodes the base steel sheet 11 is applied to the surface of the plating layer for a predetermined period of time. Next, the number of spots of iron complex ions adhered to the filter paper is counted. A location at which the spot appears is regarded as having had a pinhole P, and the number of spots is regarded as the number of pinholes P. It should be noted that the ferroxyl test does not detect pits. Detailed conditions of the ferroxyl test will be described later.

In the surface-treated steel sheet 1 according to the present embodiment, the number density of pinholes P on the surface of the Ni-W alloy layer 13 is 4.0 /cm² or less. The number of pinholes P may be 3.8 /cm² or less, 3.5 /mm² or less, or 3.0 /cm² or less. The smaller the number of pinholes P, the better, and the number density of pinholes P may even be 0 /cm². However, the number density of pinholes P may be more than 0 /cm², 1.0 /cm² or more, 1.5 /cm² or more, or 2.0 /cm² or more.

### (Operation and Effects: Effect of Improving Corrosion Resistance via suppressing Pinhole P)

The present inventors have found that the heat treatment for forming the Fe-diffused alloy layer 14, namely the alloying treatment, reduces the corrosion resistance in regions other than the worked portion. The present inventors have found that the alloying treatment increases the number density of pinholes P, and that there is a strong correlation between the number density of pinholes P and corrosion resistance. As the number density of pinholes P increases, corrosion resistance deteriorates. The pinholes P function to expose the base steel sheet 11 to a corrosive environment.

However, the present inventors have found that the number density of pinholes P can be reduced to 4.0 /cm² or less by optimizing manufacturing conditions, specifically the plating conditions prior to annealing. By reducing the number density of pinholes P to 4.0 /cm² or less, the corrosion resistance in a region, in which bending is not performed, of the surface-treated steel sheet 1 was improved to a level close to that of the surface-treated steel sheet 1 before the alloying treatment.

As described above, in the surface-treated steel sheet 1 according to the present embodiment, the Ni-containing layer 12 is used to improve the corrosion resistance of the worked portion. In the surface-treated steel sheet 1 according to the present embodiment, the deterioration of the corrosion resistance in the plane portion caused by the alloying treatment is suppressed by decreasing the number density of the pinhole P. Accordingly, the surface-treated steel sheet 1 according to the present embodiment has exceptional corrosion resistance.

The most basic aspect of the surface-treated steel sheet 1 according to the present embodiment has been described above. Next, a more preferable aspect of the surface-treated steel sheet 1 according to the present embodiment will be described.

### (Average W Concentration in Ni-W Alloy Layer 13)

The Ni-W alloy layer 13 contains Ni as a main component and further contains W. "Ni as a main component" means that the Ni concentration is 50 mass% or more. An average W concentration in the Ni-W alloy layer 13 is not particularly limited, but may be, for example, in a range of 10 to 45 mass%.

W has a function of suppressing the formation of pinholes P. By setting the average W concentration within the above-described range, the number density of pinholes P can be further suppressed. The average W concentration in the Ni-W alloy layer 13 may be 15 mass% or more, 20 mass% or more, 25 mass% or more, or 30 mass% or more. The average W concentration in the Ni-W alloy layer 13 may be 43 mass% or less, 42 mass% or less, 41 mass% or less, or 40 mass% or less. For example, the Ni-W alloy layer 13 may contain Cr, Mo, or the like.

### (Attached Amount of Ni)

The attached amount of Ni included in the plating layer (that is, the Ni-containing layer 12 and the Ni-W alloy layer 13) is not particularly limited, but may be, for example, within a range of 1.8 to 35.6 g/m². By setting the attached amount of Ni to 1.8 g/m² or more, the corrosion resistance of the surface-treated steel sheet 1 can be further enhanced. By setting the attached amount of Ni to 35.6 g/m² or less, the manufacturing cost of the surface-treated steel sheet 1 can be reduced. The Ni attached amount may be 4.5 g/m² or more, 6.2 g/m² or more, or 8.9 g/m² or more. The Ni attached amount may be 26.7 g/m² or less, 17.8 g/m² or less, or 13.4 g/m² or less.

The thickness (that is, the total thickness of the Ni-containing layer 12 and the Ni-W alloy layer 13) of the plating layer is also not particularly limited. For example, the thickness of the plating layer may be in a range of 0.2 µm to 4.0 µm.

### (Thickness of Fe-diffused Alloy Layer 14)

The thickness of the Fe-diffused alloy layer 14 is not particularly limited. Even with a small thickness, the Fe-diffused alloy layer 14 can enhance the workability of the surface-treated steel sheet 1, and improve the corrosion resistance of the worked portion. On the other hand, the thickness of the Fe-diffused alloy layer 14 may be, for example, 0.1 µm or more. This further enhances the workability of the surface-treated steel sheet 1. The thickness of the Fe-diffused alloy layer 14 may be 0.2 µm or more, 0.3 µm or more, or 0.5 µm or more. The upper limit of the thickness of the Fe-diffused alloy layer 14 is not particularly defined. For example, the plating layer may be entirely the Fe-diffused alloy layer 14. On the other hand, the Fe-diffused alloy layer 14 may be 3.0 µm or less, 2.5 µm or less, or 2.0 µm or less.

### (Thickness of Ni-Containing Layer 12)

The thickness of the Ni-containing layer 12 is also not particularly limited. Even with a small thickness, the Ni-containing layer 12 can improve the workability of the surface-treated steel sheet 1 and can improve the corrosion resistance of the worked portion. On the other hand, the thickness of the Ni-containing layer 12 may be, for example, 0.2 µm or more. This further enhances the workability of the surface-treated steel sheet 1. The thickness of the Ni-containing layer 12 may be 0.5 µm or more, 1.0 µm or more, or 1.5 µm or more. The upper limit of the thickness of the Ni-containing layer 12 is not particularly defined. For example, the Ni-containing layer 12 may be 4.0 µm or less, 3.5 µm or less, or 3.0 µm or less.

### (Component of Ni-Containing Layer 12)

The Ni-containing layer 12 contains Ni and Fe as main components, in which Fe is diffused from the base steel sheet 11. For example, the total amount of Ni and Fe in the Ni-containing layer 12 may be 98.0 mass% or more, 98.5 mass% or more, or 99.0 mass% or more. The total amount of Ni and Fe in the Ni-containing layer 12 may be 100 mass% or less, 99.5 mass% or less, or 99.0 mass% or less. The proportion of Ni and Fe in the Ni-containing layer 12 is not uniform in the thickness direction of the Ni-containing layer 12 (thickness direction of the surface-treated steel sheet 1). This is because, as described above, part or the entirety of the Ni-containing layer 12 is the Fe-diffused alloy layer 14, and in the Fe-diffused alloy layer 14, the diffusion amount of Fe from the base steel sheet 11 is different in the thickness direction of the Fe-diffused alloy layer 14. In the Fe-diffused alloy layer 14, the Fe content increases as it is closer to the base steel sheet 11. The thickness of the Fe-diffused alloy layer 14 can be appropriately selected.

The Ni-containing layer 12 may include elements other than Ni and Fe. For example, the Ni-containing layer 12 may include Cr, Mo, or the like. For example, the Ni-containing layer 12 may include one or both of Cr and Mo, and the total amount of Cr and Mo may be more than 0 mass% and 0.1 mass% or less. Various alloying elements included in the base steel sheet 11 may diffuse and enter the Ni-containing layer 12 during the alloying treatment. Accordingly, the Ni-containing layer 12 may include various impurity elements. In addition, W may diffuse from the Ni-W alloy layer 13 and enter the Ni-containing layer 12. However, the W content of the Ni-containing layer 12 is usually less than 1.0%.

### (Component and Thickness of Ni-W Alloy Layer 13)

As described above, the Ni-W alloy layer 13 contains Ni as a main component and further contains W. As illustrated in FIG. 2, when a part or the entirety of the Ni-W alloy layer 13 is the Fe-diffused alloy layer 14, the Ni-W alloy layer 13 may further contain Fe. When the Ni-W alloy layer 13 does not include the Fe-diffused alloy layer 14, the total amount of Ni and W in the Ni-W alloy layer 13 may be 95.0 mass% or more, 96.0 mass% or more, or 97.0 mass% or more. When the Ni-W alloy layer 13 does not include the Fe-diffused alloy layer 14, the total amount of Ni and W in the Ni-W alloy layer 13 may be 100 mass% or less, 99.0 mass% or less, or 98.0 mass% or less. When the Ni-W alloy layer 13 includes the Fe-diffused alloy layer 14, the total amount of Ni, W, and Fe in the Ni-W alloy layer 13 may be 95.0 mass% or more, 96.0 mass% or more, or 97.0 mass% or more. When the Ni-W alloy layer 13 includes the Fe-diffused alloy layer 14, the total amount of Ni, W, and Fe in the Ni-W alloy layer 13 may be 100 mass% or less, 99.0 mass% or less, or 98.0 mass% or less.

Like the Ni-containing layer 12, the Ni-W alloy layer 13 may include elements other than Ni, and W. The Ni-W alloy layer 13 may include, for example, Cr, Mo, or the like. For example, the Ni-W alloy layer 13 may include one or both of Co and Mo, and the total amount of Co and Mo may be more than 0 mass% and 5 mass% or less. The Ni-W alloy layer 13 may include above-described Fe, and other various impurity elements.

The thickness of the Ni-W alloy layer 13 is not particularly limited. Even with a small thickness, the Ni-W alloy layer 13 improves the corrosion resistance of the surface-treated steel sheet 1. From the viewpoint of further improving the workability of the Ni-W alloy layer 13, it is advantageous for the thickness of the Ni-W alloy layer 13 to be small. On the other hand, from the viewpoint of further improving the corrosion resistance of the Ni-W alloy layer 13, it is advantageous for the thickness of the Ni-W alloy layer 13 to be large. Accordingly, the thickness of the Ni-W alloy layer 13 may be, for example, 0.01 µm or more. This allows the corrosion resistance of the surface-treated steel sheet 1 to be further improved. The thickness of the Ni-W alloy layer 13 may be 0.05 µm or more, 0.08 µm or more, or 0.10 µm or more. The upper limit of the thickness of the Ni-W alloy layer 13 is not particularly specified. For example, the Ni-W alloy layer 13 may be 2.0 µm or less, 1.5 µm or less, or 1.0 µm or less.

### (Type of Base Steel Sheet 11, or the Like)

The components, metallographic structure, and the like of the base steel sheet 11 are not particularly limited. The component and the metallographic structure of the base steel sheet 11 can be appropriately selected according to the application of the surface-treated steel sheet 1. For example, the chemical compositions of the base steel sheet 11 may be C: 0.0001 to 0.08, Si: 0.001 to 0.03, Mn: 0.01 to 0.4, P: 0.001 to 0.03, and S: 0.000 to 0.03.

When the surface-treated steel sheet 1 is used as a material of a battery container, for example, the base steel sheet 11 is preferably low carbon aluminum-killed steel, interstitial free steel (IF steel/ultra-low carbon steel), or the like. Specific examples of the chemical composition (unit: mass%) of the base steel sheet 11 are described below.

### (Example 1) Low carbon aluminum-killed steel

### Including C: 0.057, Si: 0.004, Mn: 0.29, P: 0.014, S: 0.007, Al: 0.050, Cu: 0.034, and Ni: 0.021, and remainder: including iron and impurities

### (Example 2) IF steel

### Including C: 0.004, Si: 0.01, Mn: 0.16, P: 0.013, S: 0.006, Al: 0.029, Cu: 0.027, Ni: 0.022, and Ti: 0.013, and remainder: including iron and impurities

### (Example 3) IF steel

### Including C: 0.0012, Si: less than 0.01, Mn: 0.16, P: 0.013, S: 0.006, Al: 0.029, Cu: 0.027, Ni: 0.022, and Ti: 0.020, and remainder: including iron and impurities

The thickness of the base steel sheet 11 is also not particularly limited. When the surface-treated steel sheet 1 is used, for example, as a material of a battery container, the thickness of the base steel sheet 11 is preferably 0.15 to 2.00 mm, for example.

### (Measurement Method)

A method for measuring the number density of pinholes P includes: sampling a test piece from the surface-treated steel sheet 1; attaching a piece of filter paper impregnated with a test solution to a test surface of the test piece; peeling off the filter paper from the test surface and washing it with water; and counting the number of spots adhered to the filter paper. The test solution is prepared by dissolving 10 g/L of potassium hexacyanoferrate (II) trihydrate (potassium ferrocyanide), 10 g/L of potassium hexacyanoferrate (III) (potassium ferricyanide), and 60 g/L of sodium chloride in pure water. This measurement method is according to Annex 3 (normative) "Ferroxyl test method" of JIS H 8617:1999.

A method for measuring the average W concentration in the Ni-W alloy layer 13 is as described below. Measurement is performed using X-ray photoelectron spectroscopy (XPS). First, the surface of the surface-treated steel sheet 1 is sputtered using argon and/or xenon. Subsequently, the components of the Ni-W alloy layer 13 are measured from the surface of the Ni-W alloy layer 13 of the surface-treated steel sheet 1 toward the inside. After the measurement is completed, a cycle of performing sputtering again and then measurement is repeated. The analysis result along the depth direction of the W concentration is plotted on a graph in which the horizontal axis is the depth and the vertical axis is the W concentration. Then, a value obtained by dividing a value obtained by integrating the graph of the W concentration by the width of the section (that is, the thickness of the Ni-W alloy layer 13) is regarded as the average W concentration. By applying the above-described calculation performed on the W concentration to the Ni and Fe analysis results, the average Ni concentration and the average Fe concentration in the Ni-W alloy layer 13 can be obtained. The component measurement of the plating layer using XPS is performed using an Mg ray source. In the analysis using the Mg ray source, there is no Auger peak overlapping the photoelectron peaks of Ni, W, and Fe. Peaks of 2p orbital for Fe, 2p orbital for Ni, and 4f orbital for W were observed.

The attached amount of Ni is measured by inductively coupled plasma (ICP) optical emission spectrometer (ICP-OES) method. First, a plating layer having a predetermined area is melted with an acid. Next, the Total-Ni amount included in the solution is quantitatively analyzed by ICP-OES. The Ni attached amount per unit area can be obtained by dividing the Total-Ni amount quantified by ICP-OES by the above-described predetermined area.

The thickness of the Ni-containing layer 12, the thickness of the Ni-W alloy layer 13, and the thickness of the Fe-diffused alloy layer 14 are measured by glow discharge optical emission spectrometry (GDS). The element concentration curve can be obtained by measuring the distribution of the element concentrations using GDS.

For the measurement, a high frequency glow discharge emission surface analyzer (manufactured by HORIBA, Ltd., model number: GD-Profiler2) is used. GDS measurement conditions are described below.
Anode diameter: φ 4 mm
Gas: Ar
Gas pressure: 600 Pa
Output: 35 W

In the surface-treated steel sheet 1 according to the present embodiment, a region in which the Fe concentration is 5.0 mass% or more in the plating layer is regarded as the Fe-diffused alloy layer 14. When the component analysis is continuously performed along the depth direction from the surface of the plating layer, the Fe concentration increases as it is closer to the base steel sheet 11. A portion where the Fe concentration is 5.0 mass%, which is specified by continuously performing component analysis along the depth direction from the surface of the plating layer, is regarded as an interface between the Fe-diffused alloy layer 14 and the plating layer that is not the Fe-diffused alloy layer 14.

In the surface-treated steel sheet 1 according to the present embodiment, a region having a Ni concentration of 1.0 mass% or more is regarded as a plating layer, and other regions are regarded as the base steel sheet 11. In the plating layer of the surface-treated steel sheet 1 manufactured by the alloying treatment, the Ni concentration decreases as it is closer to the base steel sheet 11. A portion where the Ni concentration is 1.0 mass%, which is specified by continuously performing component analysis from the surface of the plating layer along the depth direction, is regarded as an interface (that is, the interface between the Fe-diffused alloy layer 14 and the base steel sheet 11) between the plating layer and the base steel sheet 11.

The distance between the interfaces is regarded as the thickness of the Fe-diffused alloy layer 14 in a sample obtained by the above-described procedure. This measurement is performed on five samples, and an average value thereof is calculated. This average value is regarded as the thickness of the Fe-diffused alloy layer 14 of the surface-treated steel sheet 1.

Further, in the surface-treated steel sheet 1 according to the present embodiment, a region where the W concentration is 1.0 mass% or more in the plating layer is regarded as the Ni-W alloy layer 13, and a region where the W concentration is less than 1.0 mass% is regarded as the Ni-containing layer 12. A portion where the W concentration is 1.0 mass%, which is specified by continuously performing component analysis along the depth direction from the surface of the plating layer, is regarded as an interface between the Ni-W alloy layer 13 and the Ni-containing layer 12.

The distance from the interface between the Ni-W alloy layer 13 and the Ni-containing layer 12 to the interface between the plating layer and the base steel sheet 11 is regarded as the thickness of the Ni-containing layer 12 in a sample obtained by the above-described procedure. This measurement is performed on five samples, and an average value thereof is calculated. This average value is regarded as the thickness of the Ni-containing layer 12 of the surface-treated steel sheet 1. The distance from the surface of the plating layer to the interface between the Ni-W alloy layer 13 and the Ni-containing layer 12 is regarded as the thickness of the Ni-W alloy layer 13 in a sample obtained by the above-described procedure. This measurement is performed on five samples, and an average value thereof is calculated. This average value is regarded as the thickness of the Ni-W alloy layer 13 of the surface-treated steel sheet 1.

### (2. Method for Manufacturing Surface-Treated Steel Sheet)

Next, a method for manufacturing the surface-treated steel sheet according to the present embodiment will be described. For example, the manufacturing method according to the present embodiment can suitably obtain the surface-treated steel sheet 1 including the above-described constituent elements.

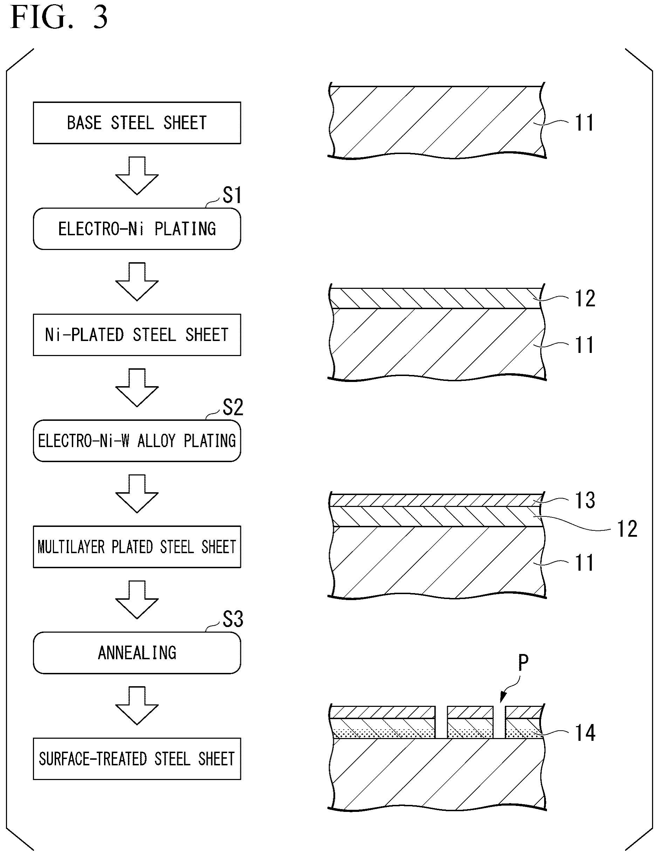

As illustrated in FIG. 3, the method for manufacturing the surface-treated steel sheet according to another aspect of the present invention includes
(S1) electro-Ni plating the base steel sheet 11,
(S2) electro-Ni-W alloy plating the base steel sheet 11, and
(S3) annealing the base steel sheet 11 including the Ni plated layer and the Ni-W alloy layer 13 disposed thereon,
in which an electric current condition in the electro-Ni plating is set to 1.0 to 5.0 A/dm², and an electric current condition in the electro-Ni-W alloy plating is also set to 1.0 to 5.0 A/dm².

### (S1 Electro-Ni Plating)

First, the base steel sheet 11 is electro-Ni plated. The plated base metal is the same as the base steel sheet 11 of the surface-treated steel sheet 1 according to the present embodiment described above. As a result, as illustrated in FIG. 3, the Ni-containing layer 12 is provided on the surface of the base steel sheet 11. A plated steel sheet obtained by electro-Ni plating is hereinafter referred to as a Ni-plated steel sheet.

### (S2 Electro-Ni-W Alloy Plating)

Next, the Ni-plated steel sheet is electro-Ni-W alloy plated. As a result, as illustrated in FIG. 3, the Ni-W alloy layer 13 is provided on the surface of the Ni-plated steel sheet. A plated steel sheet obtained by electro-Ni-W alloy plating is hereinafter referred to as a multilayer plated steel sheet.

### (S3 Annealing)

Next, the multilayer plated steel sheet (that is, the base steel sheet 11 including the Ni plated layer and the Ni-W alloy layer 13 disposed thereon) is annealed. As a result, as illustrated in FIG. 3, Fe of the base steel sheet 11 is diffused into part of the plating layer to form the Fe-diffused alloy layer 14. As a result, it is possible to obtain the surface-treated steel sheet 1 including the base steel sheet 11, the Ni-containing layer 12 disposed on the surface of the base steel sheet 11, and the Ni-W alloy layer 13 disposed on the surface of the Ni-containing layer 12, in which the Ni-containing layer 12 includes the Fe-diffused alloy layer 14.

In the electro-Ni plating (S1), it is necessary to set the current density within a range lower than usual. Generally, it is considered that the current density in electro-Ni plating does not have large influence on the characteristics of the Ni plating. Therefore, unless there are special circumstances, in electro-Ni plating or multilayer plating including electro-Ni plating, it is common to increase the electric current condition in electro-Ni plating to a value higher than 5.0 A/dm² in order to improve manufacturing efficiency. For example, Shiro HARUYAMA, "Electrochemistry for Surface Engineers" 2nd Edition, Japan, Maruzen Publishing, 2005, p.173, explains that it is desirable for the current density in plating to be as high as possible. This literature explains that the higher the current density in plating: (1) the shorter the plating time; (2) due to an increase in hydrogen overvoltage, less noble metals can be plated with higher current efficiency; and (3) due to grain refinement caused by increased overvoltage results, plating film having more dense and higher strength can be obtained. However, in the method for manufacturing the surface-treated steel sheet according to the present embodiment, it is necessary to set the electric current condition in electro-Ni plating to 1.0 to 5.0 A/dm².

In addition, in the electro-Ni-W alloy plating (S2), it is necessary to set the current density within a predetermined range. Specifically, the electric current condition in electro-Ni-W alloy plating is set to 1.0 to 5.0 A/dm².

By setting the current densities in electro-Ni plating and electro-Ni-W alloy plating within the above-described ranges, the number density of pinholes P on the surface of the Ni-W alloy layer 13 can be made 4.0 /cm² or less.

The present inventors presume the following as the reason why the number density of pinholes P can be reduced by setting the electroplating conditions within the above-described ranges. During electroplating, metal ions contained in the plating bath are deposited on the surface of the substrate, and at the same time, hydrogen ions contained in the plating bath become hydrogen gas on the surface of the substrate. As a result, hydrogen gas is absorbed into the plating layer. This hydrogen gas forms pinholes P during annealing. It is considered that the greater the current density, the greater the amount of hydrogen gas absorbed therein. Therefore, if the current density in electro-Ni plating or electro-Ni-W alloy plating exceeds 5.0 A/dm², the amount of hydrogen gas absorbed into the plating layer becomes excessive, and the number density of pinholes P cannot be reduced to 4.0 /cm² or less. However, if the current density in electro-Ni plating or electro-Ni-W alloy plating is set to 5.0 A/dm² or less, the amount of hydrogen gas contained in the Ni-containing layer 12 and the Ni-W alloy layer 13 before annealing can be reduced, and the number density of pinholes P can be made 4.0 /cm² or less.

According to the experimental results of the present inventors, the lower the current density in electro-Ni plating and electro-Ni-W alloy plating, the lower the number density of pinholes P. For example, by setting the current density in electro-Ni plating to 2.0 A/dm² or less and the current density in electro-Ni-W alloy plating to 2.0 A/dm² or less, a surface-treated steel sheet having a number density of pinholes P of 3.0 /cm² or less can be obtained.

In addition, if the amount of electricity applied in electro-Ni plating or electro-Ni-W alloy plating is insufficient, it is considered that productivity will deteriorate. Therefore, the current density in electro-Ni plating or electro-Ni-W alloy plating is 1.0 A/dm² or more.

The most basic aspect of the method for manufacturing the surface-treated steel sheet according to the present embodiment has been described above. Next, a more preferable aspect of the method for manufacturing the surface-treated steel sheet according to the present embodiment will be described.

### (Bath Component)

A Ni plating bath used in the electro-Ni plating has Ni as a main component. For example, the ratio of the Ni element included in the plating bath to all the metal elements included in the plating bath may be 95 mass% or more, 96 mass% or more, or 97 mass% or more. The Ni plating bath may also include Cr, Mo, and the like.

A Ni-W plating bath used in the electro-Ni-W alloy plating has Ni and W as main components. For example, the ratio of the W element included in the plating bath to all the metal elements included in the plating bath may be in a range of 10 to 90 mass%. The ratio of the total of the Ni element and the W element included in the plating bath to all the metal elements included in the plating bath may be 95 mass% or more, 96 mass% or more, or 97 mass% or more. In addition to Ni and W, the Ni-W plating bath may also include Cr, and Mo.

### (Attached Amount)

In the electro-Ni plating and electro-Ni-W alloy plating, the Ni attached amount is not particularly limited, but may be, for example, 1.8 to 35.6 g/m². As a result, the attached amount of Ni included in the Ni-containing layer 12 and Ni-W alloy layer 13 can be set to 1.8 to 35.6 g/m². The more preferable attached amount of Ni may be the same as the more preferable Ni attached amount in the surface-treated steel sheet 1 according to the present embodiment described above. The Ni attached amount can be controlled through the components of the plating bath and the energization amount.

### (Annealing conditions)

The annealing conditions are not particularly limited, but for example, the annealing temperature in annealing may be 630 to 860°C, and the annealing time may be 10 to 180 s. The higher the annealing temperature, the greater the thickness of the Fe-diffused alloy layer 14 becomes. Also, the longer the annealing time, the greater the thickness of the Fe-diffused alloy layer 14 becomes. As described above, at least part of the Ni-containing layer 12 may be set to be the Fe-diffused alloy layer 14. All of the Ni-containing layer 12 may be set to be the Fe-diffused alloy layer 14, and further, a part or all of the Ni-W alloy layer 13 may be set to be the Fe-diffused alloy layer 14. The annealing time and annealing temperature can be appropriately adjusted according to the application of the surface-treated steel sheet 1.

The ratio between the thickness of the Ni-containing layer 12 and the thickness of the Ni-W alloy layer 13 before annealing is not particularly limited. The thicker the Ni-containing layer 12, the more advantageous it is from the viewpoint of further improving workability. On the other hand, the thicker the Ni-W alloy layer 13, the more advantageous it is from the viewpoint of further reducing the number density of pinholes P. The thickness ratio can be appropriately selected according to the application of the surface-treated steel sheet 1.

Various aspects described with respect to the surface-treated steel sheet 1 according to the present embodiment can be applied to the method for manufacturing the surface-treated steel sheet according to the present embodiment. For example, as a matter of course, a preferable aspect of the base steel sheet 11 in the surface-treated steel sheet 1 according to the present embodiment can be applied to the method for manufacturing the surface-treated steel sheet according to the present embodiment. Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

The base steel sheet was electro-Ni plated, electro-Ni-W alloy plated, and annealed to prepare various surface-treated steel sheets. The components of the base steel sheet are indicated in Table 1. The components of the electro-Ni-W alloy plating bath are indicated in Table 2. The manufacture conditions of the surface-treated steel sheet are indicated in Table 3. The evaluation results of the surface-treated steel sheets are indicated in Table 4. The conditions not described in the tables are the same in all the examples, and the contents thereof are described below.

The components of the plating bath for electro-Ni plating were NiSO₄ · 6H₂O: 240 g/L, NiCl₂ · 6H₂O: 70 g/L, and H₃BO₃: 45 g/L. The pH of the plating bath for electro-Ni plating was 4, and the temperature was 50°C. The plating attached amount in the electro-Ni plating was controlled through the energization time.

In the electro-Ni-W alloy plating, the Ni ion source was NiSO₄ · 6H₂O, and the W ion source was Na₂WO₄ · 2H₂O. The composition (W content) of the Ni-W alloy plating was adjusted by changing the Ni ion concentration and the W ion concentration ratio. In in order to stabilize W ions in the bath, 0.5 mol/L of citric acid was added to the plating bath for electro-Ni-W alloy plating. The pH of the plating bath for electro-Ni-W alloy plating was 6, and the temperature was 50°C. The plating attached amount in the electro-Ni-W alloy plating was controlled through the energization time.

The number density of pinholes P was measured by the above-described ferroxyl test method. The measurement results are indicated in Table 5.

The average W concentration in the Ni-W alloy layer was measured by the above-described method using XPS. The measurement results are indicated in Table 5.

The total Ni attached amount was measured by the above-described inductively coupled plasma (ICP) optical emission spectrometer method. The measurement results are indicated in Table 5.

The thickness of the thickness of the Ni-containing layer and the Fe-diffused alloy layer were measured by the GDS method described above. The measurement results are indicated in Table 5.

Corrosion resistance was evaluated by a salt spray test (SST) in accordance with JIS Z 2371:2015. The test piece was 50 × 100 mm, and its end faces were sealed with polyester tape. The temperature inside the test chamber was 35 ± 1°C, and the salt solution for spraying was prepared by dissolving sodium chloride in deionized water and adjusting the concentration to 50 g/L. The red rust generation area fraction on each test piece after 4 hours from the start of the test was measured and evaluated according to the following criteria:
- Test piece with red rust generation area fraction of 10% or more: 3
- Test piece with red rust generation area fraction of 5% or more and less than 10%: 2
- Test piece with red rust generation area fraction of less than 5%: 1

**[Table 1]**

| Steel sheet type | Steel sheet component |
|---|---|
| Steel sheet 1 | C: 0.057, Si: 0.004, Mn: 0.29, P: 0.014, S: 0.007, Al: 0.050, Cu: 0.034, Ni: 0.021, Remainder: including iron and impurities |
| Steel sheet 2 | C: 0.004, Si: 0.01, Mn: 0.16, P: 0.013, S: 0.006, Al: 0.029, Cu: 0.027, Ni: 0.022, Ti: 0.013, Remainder: including iron and impurities |

**[Table 2]**

| Ni-W plating bath type | Ni ion concentration mol/L | W ion concentration mol/L |
|---|---|---|
| Bath 1 | 0.20 | 0.10 |
| Bath 2 | 0.20 | 0.15 |
| Bath 3 | 0.20 | 0.20 |
| Bath 4 | 0.20 | 0.25 |
| Bath 5 | 0.20 | 0.30 |

**[Table 3]**

| Example Number | Steel sheet type | Ni-W plating bath type | Total Ni attached amount g/m² | Electric current condition in Ni plating A/dm² | Electric current condition in Ni-W alloy plating A/dm² | Annealing temperature °C | Annealing time second |
|---|---|---|---|---|---|---|---|
| Example 1 | Steel sheet 1 | Bath 1 | 8.9 | 2.0 | 2.0 | 750 | 15 |
| Example 2 | Steel sheet 1 | Bath 1 | 10.8 | 10.0 | 2.0 | 750 | 15 |
| Example 3 | Steel sheet 1 | Bath 1 | 12.1 | 2.0 | 10.0 | 750 | 15 |
| Example 4 | Steel sheet 1 | Bath 1 | 8.0 | 2.0 | 2.0 | 750 | 5 |
| Example 5 | Steel sheet 1 | Bath 5 | 10.5 | 2.0 | 2.0 | 750 | 15 |
| Example 6 | Steel sheet 1 | Bath 1 | 1.0 | 2.0 | 2.0 | 750 | 15 |
| Example 7 | Steel sheet 1 | Bath 1 | 10.2 | 2.0 | 2.0 | 600 | 15 |
| Example 8 | Steel sheet 1 | Bath 1 | 11.6 | 2.0 | 2.0 | 750 | 15 |
| Example 9 | Steel sheet 2 | Bath 1 | 13.9 | 2.0 | 2.0 | 750 | 15 |
| Example 10 | Steel sheet 1 | Bath 1 | 12.2 | 2.0 | 2.0 | 750 | 15 |
| Example 11 | Steel sheet 1 | Bath 1 | 10.5 | 2.0 | 2.0 | 750 | 15 |
| Example 12 | Steel sheet 1 | Bath 1 | 17.2 | 2.0 | 2.0 | 750 | 15 |
| Example 13 | Steel sheet 1 | Bath 2 | 8.5 | 2.0 | 2.0 | 750 | 15 |
| Example 14 | Steel sheet 1 | Bath 3 | 12.3 | 2.0 | 2.0 | 750 | 15 |
| Example 15 | Steel sheet 1 | Bath 4 | 10.4 | 2.0 | 2.0 | 750 | 15 |
| Example 16 | Steel sheet 1 | Bath 1 | 10.6 | 4.5 | 1.5 | 750 | 15 |
| Example 17 | Steel sheet 1 | Bath 1 | 11.1 | 1.5 | 4.5 | 750 | 15 |
| Example 18 | Steel sheet 1 | Bath 1 | 9.8 | 4.5 | 4.5 | 750 | 15 |

**[Table 4]**

| Example Number | Number density of pinholes /cm² | Average W concentration in Ni-W alloy layer mass% | Total attachedamount of Ni g/m² | Thickness of Fe-diffused alloy layer µm | Thickness of Ni-containing layer µm | Corrosion resistance |
|---|---|---|---|---|---|---|
| Example 1 | 2.5 | 32 | 8.9 | 1 | 1.0 | 1 |
| Example 2 | 5.2 | 34 | 10.8 | 1 | 1.1 | 3 |
| Example 3 | 5.6 | 32 | 12.1 | 1 | 1.3 | 3 |
| Example 4 | 3.8 | 35 | 8.0 | 0.1 | 0.9 | 2 |
| Example 5 | 2.3 | 8 | 10.5 | 1 | 1.1 | 1 |
| Example 6 | 2.9 | 33 | 1.0 | 1 | 0.1 | 1 |
| Example 7 | 3.1 | 35 | 10.2 | 0.05 | 1.1 | 2 |
| Example 8 | 2.2 | 31 | 11.6 | 1 | 1.3 | 1 |
| Example 9 | 2.7 | 32 | 13.9 | 1 | 1.5 | 1 |
| Example 10 | 2.5 | 33 | 12.2 | 1 | 1.3 | 1 |
| Example 11 | 1.8 | 32 | 10.5 | 1 | 1.1 | 1 |
| Example 12 | 2.3 | 34 | 17.2 | 1 | 2.0 | 1 |
| Example 13 | 2.7 | 35 | 8.5 | 1 | 1.0 | 1 |
| Example 14 | 2.9 | 31 | 12.3 | 1 | 1.3 | 1 |
| Example 15 | 2.2 | 32 | 10.4 | 1 | 1.1 | 1 |
| Example 16 | 3.6 | 31 | 10.6 | 1 | 1.2 | 2 |
| Example 17 | 3.5 | 33 | 11.1 | 1 | 1.1 | 2 |
| Example 18 | 3.7 | 32 | 9.8 | 1 | 1.3 | 2 |

In the test pieces of Example 2 and Example 3, the number density of pinholes was excessive. The corrosion resistance of these test pieces was "3", that is, inferior. In the manufacturing of Example 2, the amount of electricity applied in Ni plating was excessive. In the manufacturing of Example 3, the amount of electricity applied in Ni-W plating was excessive. That is, in Examples 2 and 3, it is presumed that a large number of pinholes were formed in the plating layer due to inappropriate manufacturing conditions.

On the other hand, in the test pieces obtained by an appropriate manufacturing method, the formation of pinholes was suppressed. The corrosion resistance of these test pieces was favorable. In Examples 1, 5, 6, and 8 to 15, in which the current density in electro-Ni plating was set to 2.0 A/dm² or less and the current density in electro-Ni-W alloy plating was set to 2.0 A/dm² or less, the number density of pinholes was 3.0 /cm² or less. The corrosion resistance of Examples 1, 5, 6, and 8 to 15 was further superior to that of the examples in which the number density of pinholes was more than 3.0 /cm².

### REFERENCE SIGNS LIST

- 1: Surface-treated steel sheet
- 11: Base steel sheet
- 12: Ni-containing layer
- 13: Ni-W alloy layer
- 14: Fe-diffused alloy layer
- P: Pinhole

## Claims

1. A surface-treated steel sheet, comprising:
a base steel sheet;
a Ni-containing layer disposed on a surface of the base steel sheet; and
a Ni-W alloy layer disposed on a surface of the Ni-containing layer,
wherein
the Ni-containing layer includes an Fe-diffused alloy layer, and
a number density of pinholes on a surface of the Ni-W alloy layer is 4.0 /cm² or less.

2. The surface-treated steel sheet according to claim 1, wherein
an average W concentration in the Ni-W alloy layer is 10 to 45 mass%.

3. The surface-treated steel sheet according to claim 1 or 2, wherein
an attached amount of Ni included in the Ni-containing layer and the Ni-W alloy layer is 1.8 to 35.6 g/m².

4. The surface-treated steel sheet according to claim 1 or 2, wherein
the Fe-diffused alloy layer has a thickness of 0.1 to 3.0 µm.

5. The surface-treated steel sheet according to claim 1 or 2, wherein
the Ni-containing layer has a thickness of 0.2 to 4.0 µm.

6. The surface-treated steel sheet according to claim 1 or 2, wherein
the number density of the pinholes on the surface of the Ni-W alloy layer is 3.0 /cm² or less.

7. The surface-treated steel sheet according to claim 1 or 2, wherein
only part of the Ni-containing layer is the Fe-diffused alloy layer.

8. The surface-treated steel sheet according to claim 1 or 2, wherein
the Ni-containing layer is entirely the Fe-diffused alloy layer, and part of the Ni-W alloy layer is the Fe-diffused alloy layer.
